# EUROPEAN PATENT SPECIFICATION

(11) **EP 2 071 855 B1**
(45) Date of publication and mention of the grant of the patent: **30.03.2011**
(21) Application number: 07764241.1
(22) Date of filing: 18.07.2007
(51) Int. Cl.: H04W 36/14, H04W 76/02

(54) **A CALL HANDOFF CONTROL METHOD, USER DEVICE, VOICE CALL CONTINUITY SERVER AND COMMUNICATION SYSTEM FOR PRODIVING VOICE CALL CONTINUITY**
STEUERUNGSVERFAHREN FÜR ANRUFÜBERGABE, BENUTZERGERÄT, SPRACHANRUFKONTINUITÄTSSERVER UND SYSTEM ZUR BEREITSTELLUNG VON SPRACHANRUFKONTINUITÄT
PROCÉDÉ DE COMMANDE DE TRANSFERT INTERCELLULAIRE D'APPEL, DISPOSITIF UTILISATEUR, SERVEUR DE CONTINUITÉ D'APPEL VOCAL ET SYSTÈME DE FOURNITURE D'UNE CONTINUITÉ D'APPEL VOCAL

(30) Priority: 05.09.2006 CN 200610127153
(43) Date of publication of application: 17.06.2009
(60) Divisional application: 10161297.6
(73) Proprietor: Huawei Technologies Co., Ltd., Longgang District, Shenzhen Guangdong 518129 (CN)
(72) Inventor: LONG, Shuiping, Shenzhen, Guangdong 518129 (CN); XU, Jie, Shenzhen, Guangdong 518129 (CN); ZHANG, Yi, Shenzhen, Guangdong 518129 (CN); YOU, Fang, Shenzhen, Guangdong 518129 (CN)
(74) Representative: Gulde Hengelhaupt Ziebig & Schneider
(86) International application number: PCT/CN2007/070314
(87) International publication number: WO 2008/028416

(56) References cited:
- WO-A-2005/025108
- WO-A1-2006/066447
- WO-A2-2005/025108
- CN-A- 1 620 182
- CN-A- 1 679 274
- US-A1- 2004 264 410
- 3GPP: "3rd Generation Partnership Project; Technical specification group Services and System Aspects; Voice Call Continuity between CS and IMS; Stage 2 (Release 7)"[Online] 31 July 2006 (2006-07-31), XP002560259 Sophia Antipolis, France Retrieved from the Internet: URL:http://www.3gpp.org/ftp/Specs/html-inf o/23206.htm> [retrieved on 2009-12-14]

## Description

### Field of the Invention

The present invention relates to the field of mobile communications and in particular to a call handover control method, a communication system and a user equipment.

### Background of the Invention

Voice Call Continuity (VCC) can enable communication of a user moving between various access technologies to keep continuous. For example, when the user moves from a traditional 2G network (e.g., Global System for Mobile communications (GSM), Code Division Multiple Access (CDMA), etc.) to a 3G network (e.g., a Universal Mobile Telecommunications System (UMTS), etc.), a High Rate Packer Data (HRPD) system, etc.), his communication proceeds while initiating another 3G service, e.g., an high rate access to the Internet.

The VCC technology is based upon the Internet protocol Multimedia Subsystem (IMS), which is a network over an IP access network (the PS domain part of the UMTS, the HRPD network or a Wireless Local Area Network (WLAN)) and which offers basic service functions on the basic of which an operator can develop various services. In order to enable the VCC, when a user initiates/receives a call over a Circuit Switched (CS) network (i.e., the 2G network), call signaling will be directed into the IMS network in which a network element of VCC Application Server (VCC AS) can control VCC handover. A network element through which the IMS is directed into the CS network is a Media Gateway Control Function (MGCF), which also controls an MGW to perform routing of a bearer.

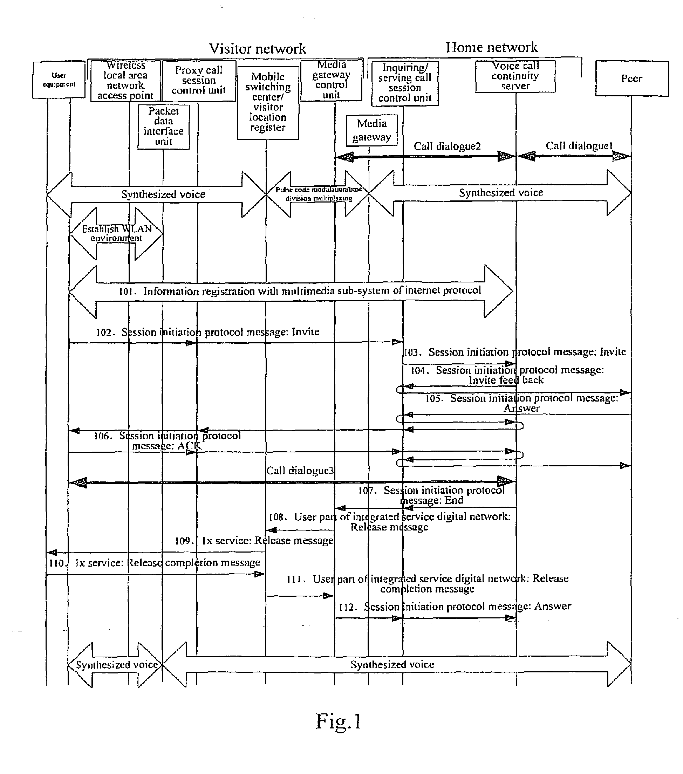

A handover flow of the CS to the IMS (herein the WLAN access technology is employed) in the existing VCC technology is as illustrated in Fig.1.

[0005] When a UE enjoying a CS voice service enters the coverage of the WLAN, a voice handover to the WLAN may be initiated due to a degraded wireless environment of the CS network or an IMS priority.

A specific flow is as follows.

101. If the User Equipment (UE) has not been registered with the IMS, then a registration is performed.

102. The UE initiates the voice handover to the WLAN by sending an IMS call to an address identity associated with the VCC AS and sending an INVITE message to a Proxy Call Session Control Function (P-CSCF), which message then arrives at a Serving Call Session Control Function (S-CSCF).

103. The S-CSCF forwards the INVITE message to the VCC AS according to initial Filter Criteria, and the address identity associated with the VCC AS and a P-Asserted-Identity (privacy asserting identity) head (containing the CS domain Mobile Directory Number (MDN) of the UE) are combined to indicate the user equipment initiating the VCC handover.

104. The VCC AS sends a re-INVITE message containing new Service Description Protocol (SDP) information of a WLAN call for the UE to the Other End Point (the other part of the call, including a network and a user equipment) through the S-CSCF.

105. The other end point responds with 200 OK, which finally arrives at the UE.

106. The UE sends out ACK, which finally arrives at the Other End Point, thereby establishing a Session Initiation Protocol (SIP) call dialogue 3 between the UE and the VCC AS.

107. Upon reception of ACK, the VCC AS sends a BYE message to the MGCF through the S-CSCF to remove the CS voice call (an SIP call dialogue 2).

108~112: The CS voice call between a Mobile Switching Center (MSC) and the UE is released, and the MGCH returns 200 OK to the VCC AS.

However, the existing VCC handover is assumed to be performed in an on-going state without consideration of non-on-going state factors of Ringing/Ring Back Tone (for a called/calling user scenario)/keeping, etc. For example, when a handover occurs while the UE of the called user rings, the UE may initiate a calling user flow, but a true user off-hook signal may not be transferred; and when a handover occurs with the UE of the calling user, the UE also may initiate a calling user flow, and at this time generation of a ring back tone (e.g., a color ring tone) may be disordered. WO 2005/025108 A2 discloses a method for facilitating a handoff of a subscriber unit from a wireless local area network to a wide area network. It discloses that the SU 112 determines whether it is about to leave the WLAN 104, if it is so, the SU 112 checks whether there is a new call attempting to begin on the enterprise E1 from a communicating device. If not, the SU 112 checks whether there is an ongoing call on E1 with the communicating device. If there is a new call attempting to begin on the enterprise E1 from a communicating device or there is an ongoing call on E1 with the communicating device, then the SU 112 sends to WLAN a SIP message with contact address of C1, to make the WLAN to transfer the new call or the ongoing call to C1.

3GPP: "3rd Generation partnership Project; Technical specification group Services and System Aspects; Voice Call Continuity between CS and IMS; Stage 2 (Release 7)" (July 31, 2006, XP002560259, Sophia Antipolis, France) specifies the functional architecture and information flows of the Voice Call Continuity feature which provides the capability to transfer the path of a voice call between a 3GPP CS system (GSM/UMTS) and IMS, and vice versa.
US 2004/0264410 A1 discloses a communication unit (10), which determines if it should switch between the wireless local area network (11) and the cellular network for obtaining service, requests a handoff to the wireless local area network (11) or to the cellular network by sending a SIP message addressed to either a public number (229) or a private number (231) associated with the communication unit (10) upon making the determination.

### Summary of the Invention

Embodiments of the invention provide a call handover control method, a communication system and a user equipment so as to prevent the user equipment from being switched when the user is in non-on-going states of Ringing/Ring Back Tone/keeping, etc.

A call handover control method between a first telecommunication network and a second telecommunication network based upon the network side according to an embodiment of the invention includes: detecting, by a voice call continuity application server, VCC AS, the state of a current call when receiving a handover request from a user equipment, UE, in communication with the first network, for the current call which is to be transferred from the first network to the second network; determining, by the VCC AS, whether the current call is in the on-going state in accordance with the detection result; and maintaining the UE communicating with the first network, if the call is in the Ring Back Tone state or the call Keeping state; or initiating the handover from the first network to the second network, if the call is in the on-going state.

A call handover control method between a first telecommunication network and a second telecommunication network based upon the user side according to an embodiment of the invention includes: obtaining, by a user equipment, UE, in communication with the first network, the state of a current call by a message of the session initiation protocol when the current call which is to be transferred from a first network to a second network; determining, by the UE, whether the current call is in the on-going state in accordance with the call state; and if the call is in the on-going state, sending a call handover request to the second network; or if the call is in a Ring Back Tone state or a call Keeping state, continuing with the call in the current network.

A voice call continuity server according to an embodiment of the invention is adapted to: detect the state of a current call when receiving a handover request from a user equipment, UE, in communication with the first network, for the current call which is to be transferred from the first network to the second network; determine whether the current call is in the on-going state in accordance with the detection result; and maintain the UE communicating with the first network, if the call is in the Ring Back Tone state or the call Keeping state; or initiate the handover from the first network to the second network, if the call is in the on-going state.

A communication system according to an embodiment of the invention includes: a user equipment adapted to send a handover request to a voice call continuity server; and the voice call continuity server adapted to detect the state of a current call when receiving a handover request from a user equipment, UE, in communication with the first network, for the current call which is to be transferred from the first network to the second network; determine whether the current call is in the on-going state in accordance with the detection result; and maintain the UE communicating with the first network, if the call is in the Ring Back Tone state or the call Keeping state; or initiate the handover from the first network to the second network, if the call is in the on-going state.

A user equipment according to an embodiment of the invention includes: an information acquisition unit adapted to obtain the state of a current call by a message of the session initiation protocol when the current call which is to be transferred from a first network to a second network; and a handover decision unit adapted to determine whether the current call is in the on-going state in accordance with the call state; and send a call handover request to the second network if the call is in the on-going state; wherein the call is handed over from the first network to the second network in response to obtaining the handover request from the UE; or continue with the call in the current network if the call is in a Ring Back Tone state or a call Keeping state.

A communication system for controlling a call handover between a first communication network and a second telecommunication network according to an embodiment of the invention includes: a user equipment in communication with the first network, wherein the UE includes: an information acquisition unit adapted to obtain the state of a current call by a message of the session initiation protocol when the current call which is to be transferred from a first network to a second network; and a handover decision unit adapted to determine whether the current call is in the on-going state in accordance with the call state; and send a call handover request to the second network if the call is in the on-going state; wherein the call is handed over from the first network to the second network in response to obtaining the handover request from the UE; or continue with the call in the current network if the call is in a Ring Back Tone state or a call Keeping state.

As can be apparent from the above technical solutions, the embodiments of the invention have the following advantages:

Firstly in the embodiments of the invention, when the user requests a handover, it is firstly determined whether the call is in the on-going state, and if not so, then the handover is rejected, so that the embodiments of the invention can avoid effectively the user from being switched when the user is in non-on-going states of Ringing/Ring Back Tone/Keeping etc.

Secondly, the method according to the embodiments of the invention is applicable to a GSM network, a UMTS network and a CDMA network, thereby improving adaptability of the invented method.

Finally, the method according to the embodiments of the invention proposes a plurality of determination approaches for determining a Ring Back Tone in a CDMA network and calling state of keeping, thereby improving flexibility of the invented method.

### Brief Description of the Drawings

Fig. 1 illustrates a flow chart of a handover method in the prior art;

Fig.2 illustrates a general flow chart of a call handover control method according to an embodiment of the invention;

Fig.3 illustrates a flow chart for a calling UE in a GSM/UMTS network;

Fig.4 illustrates a flow chart for a calling UE in a CDMA network in the prior art;

Fig.5 illustrates a call flow chart in which an MSC issues off-hook information according to an embodiment of the invention;

Fig.6 illustrates a call flow chart in which a VCC AS issues hand-off information according to an embodiment of the invention; and

Fig.7(a) and Fig.7(b) are schematic diagram of a system according to an embodiment of the invention.

### Detailed Description of the Embodiments

The embodiments of the invention provide a call handover control method, a communication system and a user equipment so as to prevent the user equipment from being switched when the user is in non-on-going states of Ringing/Ring Back Tone/keeping, etc.

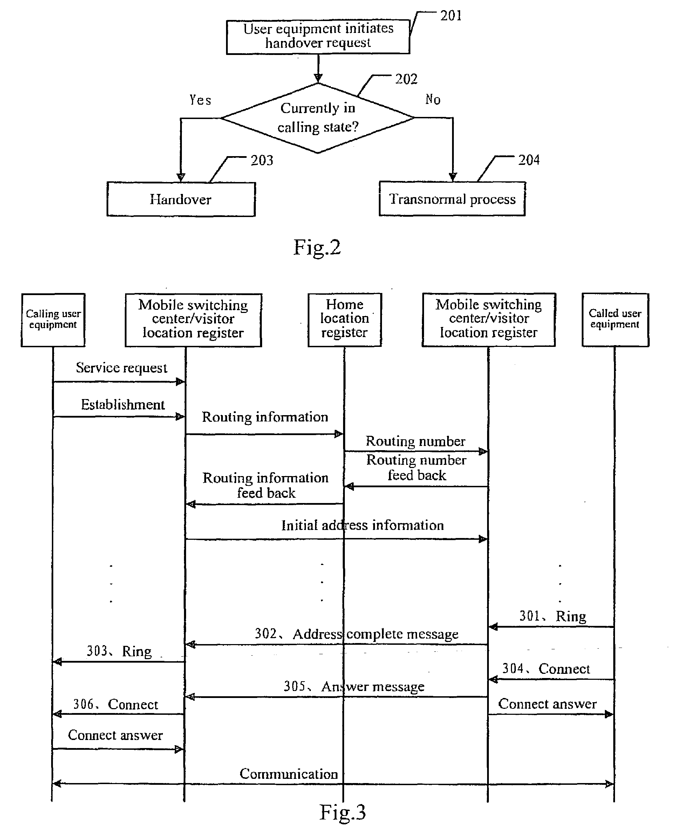

Referring to Fig.2, a flow of the call handover control method based on the network side according to an embodiment of the invention is as follows:

201. A user equipment initiates a handover request.

Particularly, when the user movies into a different network coverage area, the user equipment can detect a change of network condition and then initiates a handover request; or the user can request through the user equipment actively for a handover.

202. It is determined whether a call is on-going, and if so, then the flow goes to the step 203; otherwise, the flow goes to the step 204.

203. The handover is performed.

204. An exception handling is performed.

Particularly, the exception handling may reject the handover, or store the handover request and feed back a wait message to the user equipment and then process the handover request after the call becomes in the on-going state.

As can be apparent from the above solution, in the embodiment of the invention, it is firstly determined whether the current call is in the on-going state prior to performing the handover, and if not so, then the handover request is rejected, to thereby prevent effectively the user from being switched when the user is in non-on-going states of Ringing/Ring Back Tone/ keeping, etc.

Furthermore, an embodiment of the invention further provides a call handover control method based upon the user side in which the determination of a handover is made at the user side, i.e., a user equipment, that is, the user equipment detects the state of a call and initiates a handover request only if the call is on-going, and a multimedia sub-system network of the internet protocol performs the handover directly instead of performing the determination upon reception of the request initiated from the user equipment.

The invention will be described in details below with reference to the embodiments thereof.

The first embodiment relates to the control of a call handover of the IMS to the CS.

A high rate IP access network is typically covered with hotspots, and after the UE leaves a hotspot, continuity of a call shall be maintained so that the call can be switched smoothly to the CS network.

In this case, the UE when initiating or accepting the call at the IMS adopts the SIP protocol for signaling interaction to obtain the current state of the call, e.g., Ringing, Ring Back Tone, keeping or the on-going state, through a signaling message, and thus the current state can be determined directly at the UE.

A Second embodiment relates to the control of a call handover of the CS to the IMS in the Ringing state.

During ringing of a called user (the call has not been accepted by the local user), the UE knows the state of the call and therefore shall determine whether the local user has accepted the call when the UE makes a VCC handover decision so as to prevent the handover of the CS to the IMS from being performed during ringing.

Particularly, the handover of the CS to the IMS refers to that the UE after entering a hotspot switches a voice service to the IP access network of the IMS, while the UE may initiate a high rate data service, where the rate of Voice over IP (VoIP) is lower than that of the voice service over the CS network.

A third embodiment relates to the control of a call handover of the CS to the IMS in the Ring Back Tone state when the UE initiates a call over the GSM/UMTS network.

As illustrated in Fig.3, for a call initiated from the UE over the GSM/UMTS network, since the MSC to which the calling UE is connected issues to the calling user a Connect message indicating off-hook of the called user at the Other End Point when the called user hooks off, the calling user can determine from the message that the current state is the on-going state.

An essential flow is as follows.

301. The called UE sends a ring message to the MSC or Visitor Location Register (VLR) connected thereto.

302. The MSC/VLR to which the called UE is connected sends an Address Complete Message (ACM) to the MSC/VLR to which the calling UE is connected to inform that the called UE is ringing.

303. The MSC/VLR to which the calling UE is connected prompts the calling UE of that the current call state is Ring Back Tone state.

304. When the called user hooks off, the called UE sends a Connect message to the MSC/VLR connected thereto.

305. The MSC/VLR of the called party sends an Answer message (ANM message) to the MSC/VLR to which the calling UE is connected to inform that the called party has unhooked.

306. The MSC/VLR to which the calling UE is connected prompts the calling UE of that the current call state is the on-going state.

In case of a handover of the CS to the IMS, when the UE initiates a call over the CDMA network, there are nine particular approaches of controlling a call handover in the Ring Back Tone state for which a reference can be made to the following, the fourth to the twelve embodiments.

In the fourth embodiment, the UE determines whether off-hook information has been received (that is, whether the call is in the on-going state) when the UE makes a VCC handover decision, and if not so, then no handover is permitted. This embodiment is implemented through issuing off-hook information to the UE by the MSC.

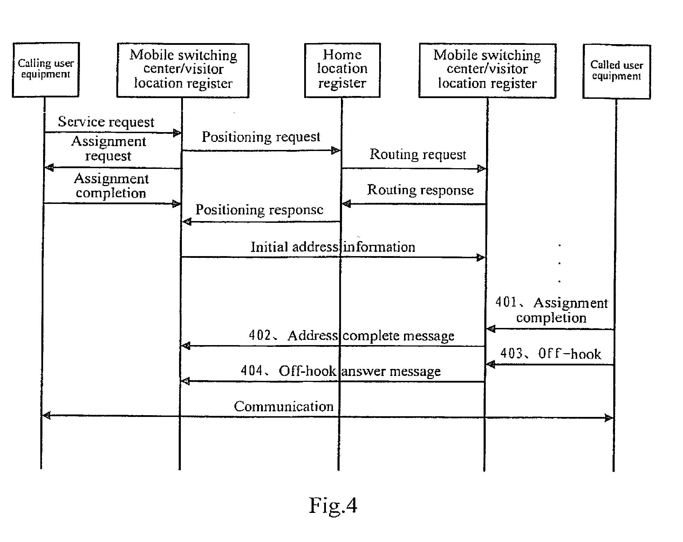

Referring to Fig.4, in the CDMA network of the prior art, the MSC to which the calling UE is connected will not issue any off-hook information after the Other End Point hooks off and therefore the UE can not distinguish between the Ring Back Tone and on-going states. A flow of the prior art is as follows:

401. The called UE prompts completion of MSC/VLR assignment.

402. The MSC/VLR of the called party sends an ACM message to the MSC/VLR to which the calling UE is connected to inform that the current state is that the called UE is ringing, that is, the calling UE accepts a ring back tone.

403. When the called UE hooks off, the called UE sends a Connect message to the MSC/VLR as a prompt of that the called party has unhooked.

404. The MSC/VLR of the called party sends an ANM message to the MSC/VLR to which the calling UE is connected to inform that the current state is the on-going state.

In order that the calling UE can receive the off-hook information, the existing flow shall be modified, the off-hook information is issued from the MSC in this embodiment: the MSC notifies the UE upon reception of the off-hook message (ANM/CON) of the called party, for example, by extending the existing message of Flash with information, to which a support for a new Information record is added.

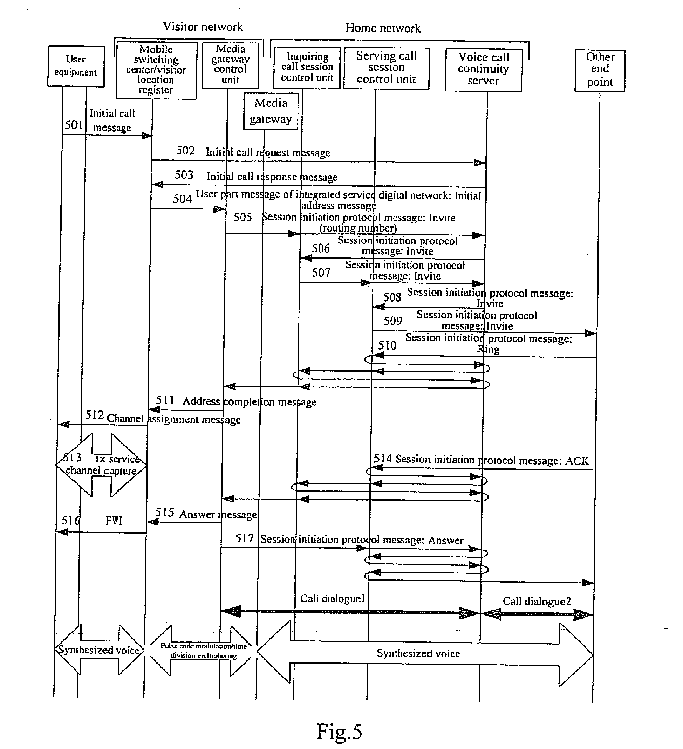

Referring to Fig.5, a specific flow is as follows.

501. The UE sends out an initial call message.

502. The MSC invokes an initial call WIN trigger to obtain routing information. The CS side of the VCC AS acting as an SCP which receives MAP ORREQ (a request MAP message of the calling user).

503. The VCC AS creates and stores the MDN and the CdPN (the telephone number of the called user) for a subsequent call and returns the IMS routing number of the VCC AS.

504. The MSC/VLR sends to the MGCF of the UE visitor network an ISUP IAM message containing the routing information of the UE (i.e., the IMS routing number of the CdPN field and the UE MDN of the CgPN field) and a PCM/TDM trunk (for connection the MSC with the MGW).

505. The MGCF requests the MGW for connection with the PCM/TDM trunk and assigns an ephemeral termination for connection with the Other End Point (OEP).The MGCF sends INVITE to the I-CSCF in which the address identify (an E.164 number) associated with the VCC AS is in the Request URI head and the MDN of the UE is in the P-Asserted-ID head. The I-CSCF sends the INVITE to the VCC AS.

506. The VCC AS sends to the I-GSCF the INVITE message containing the routing information of the UE. The Request URI head now contains the MDN of the UE, and P-Asserted-ID contains the CdPN stored in the step 502.

507. The I-CSCF searches the HSS to obtain the address of an S-CSCF assigned to the UE during registration and sends INVITE to the S-CSCF. The S-CSCF sends to the VCC AS based upon the filter criteria an SIP INVITE message containing the routing information of the UE.

508. The VCC AS acts as a Back to Back User Agent (B2BUA) and establishes a new call dialogue 2 and returns INVITE to the S-CSCF.

509. The S-CSCF sends INVITE to the OEP once the filter criteria process is completed.

510. The OEP responds with an SIP 180 Ringing message containing the SDP information of the OEP, the message finally reaches the MGCF.

511. The MGCH modifies the MGW ephemeral termination in accordance with the OEP SDP and sends an ISUP ACM message to the MSC/VLR.

512. The MSC/VLR sends a channel assignment message to the UE.

513. The UE captures a 1 x service channel.

514. The OEP replies to the call and returns an SIP 200 OK message to the MGCF.

515. The MGCG sends an ISUP ANM message to the MSC/VLR.

516. The MSC issues to the UE a Flash With Information message carrying off-hook information of the Other End Point.

517. The MGCF sends an SIP ACK message to the OEP to thereby accomplish the establishment of the call dialogue 1 between the MGCF and the VCC AS and the establishment of the call dialogue 2 between the VCC AS and the OEP.

As can be apparent from the above flow, the MSC enables the UE to obtain the off-hook information by issuing to the UE the FWI message carrying the off-hook information of the Other End Point.

A new type of information record as illustrated in the following table shall be defined in the above flow:

**Table 1**

| Information record | Record type (binary) | Message type | f-csch | f-dsch |
|---|---|---|---|---|
| Call wait information | 00010101 | AWI | N | Y |
| | | FWI | N | Y |
| Off-hook information | 00010110 | FWI | N | y |

Particularly, AWI refers to the message of Alert With Information, FWI refers to the message of Flash With Information, f-dsch refers to the forward dedicated signaling channel (from the network to the UE); and f-csch refers to the forward common signaling channel (from the network to the UE).

The format of the Flash With Information message is as illustrated in the following table:

| Field | Length (bits) | Numeral |
|---|---|---|
| RECORD_TYPE | 8 | 00010110 |
| RECORD_LEN | 8 | 00000000 |
| Type-specific fields | 8*RECORD_LEN | Null |

In the fifth embodiment, the UE determines whether off-hook information has been received (that is, whether the call is in the on-going state) when the UE makes a VCC handover decision, and if not so, then no handover is permitted. This embodiment is implemented through issuing off-hook information to the UE by the VCC AS.

The IMS network side sends off-hook information to the UE, for example, by sending a MESSAGE/NOTIFY message to the UE over an IP access network or by sending SMS to the UE.

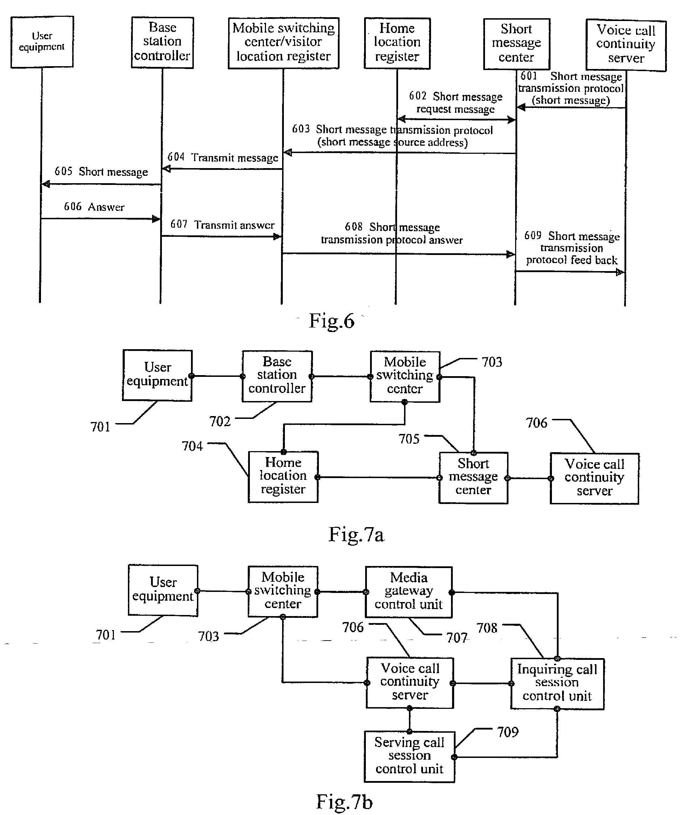

Referring to Fig.6, a specific flow is as follows.

601. The VCC AS sends an SMDPP message to a Short Message Service Center (SMSC).

602. The SMSC sends an SMSREQ message to a Home Location Register (HLR).

603. The SMSC sends to the MSC/VLR the SMDPP message containing a source address.

604. The MSC/VLR sends an ADDS Deliver message to the BSC.

605. The BSC sends an SMS message to the UE.

606. The UE sends an ACK confirmation message to the BSC.

607. The BSC sends an ADDS Deliver ACK confirmation message to the MSC/VLR.

608. The MSC/VLR sends an SMDPP ACK confirmation message to the SMSC.

609. The SMSC sends the SMDPP ACK confirmation message to the VCC AS.

Particularly, the text of SMS contains such information as the current state being the on-going state, the number of the calling/called user, etc.

Furthermore, the UE can initiate the VCC handover normally without necessity to wait the off-hook information. If the IMS network detects that the current call is in the Ring Back Tone state, then the network side returns a rejection response message to the UE to reject the handover request.

In the sixth embodiment, the VCC AS checks that the call is in the Ring Back Tone state and rejects the handover request: for the rejection, a Try-After head instructing the UE to retry after a period of time (e.g., 10 seconds) is contained.

In the seventh embodiment, the VCC AS checks that the call is in the Ring Back Tone state and rejects the handover request; for the rejection no Try-After head is contained, and the UE decides by itself to retry after an interval of time (e.g., 15 seconds).

In the eighth embodiment, the VCC AS checks that the call is in the Ring Back Tone state, rejects the handover request; for the rejection no Try-After head is contained, while a message of MESSAGE is sent, and the text of which message indicates that the Other End Point has not unhooked. Upon reception of an event of off-hook by the user at the Other End Point, the VCC-AS sends to the UE a message of MESSAGE, the text of which indicates that the Other End Point has unhooked.

The above three embodiments are advantageous in that that they are simple and convenient to implement.

In the ninth embodiment, the VCC AS checks that the call is in the Ring Back Tone state, rejects the handover request, for the rejection no Try-After head is contained, and defines a rejection reason as prohibition of a handover in the Ring Back Tone state. Upon reception of the rejection reason, the UE sends a SUBSCRIBE message to the VCC AS to subscribe for an event of off-hook by the user at the Other End Point and waits for transmission of an off-hook event notification from the VCC AS.

In the tenth embodiment, a rejection reason is defined as prohibition of a handover in the Ring Back Tone state, and the UE subscribes implicitly to the VCC AS for an event of off-hook by the user at the Other End Point (i.e., transmission of SUBSCRIBE message is not needed) and waits for an off-hook event notification from the VCC AS.

In the eleventh embodiment, a rejection reason is defined as prohibition of a handover in the Ring Back Tone state, the UE waits for an off-hook event notification from the VCC AS. Upon reception of an event of off-hook by the user at the Other End Point, the VCC AS sends to the UE a message of MESSAGE, the text of which indicates the information of off-hook at the Other End Point.

The above three embodiments are advantageous in that that the UE can accurately find the reason of the error. So it will not be necessary for the UE to repeatedly retry transmission of the handover request, therefore signaling consumption is reduced.

Alternatively, the ACC AS may not reject directly the handover request initiated from the UE.

In the twelfth embodiment, the UE initiates normally the VCC handover. As the IMS network detects that the current call is in the Ring Back Tone state, it returns to a response 182 (the request is waiting to be processed) or 183 (the request is being processed), and proceeds with the VCC handover flow after off-hook at the Other End Point.

In the case of a handover of the CS to the IMS, there is control on a handover of a call initiated by the UE over the CDMA network in the call Keeping state.

In the thirteenth embodiment, when a local Keeping operation is performed, the local UE can obtain the local call state, so that the UE shall determine whether the current call is in the call Keeping state when the UE performs a VCC handover decision to thereby prevent a handover of the CS to the IMS from being performed in the call Keeping state.

In the fourteenth embodiment, when a keeping operation is performed at the Other End Point, the UE knows that the current state of a call is Keeping for a GSM and UMTS networks. The reason exists in that the MSC to which the local UE is connected notifies the UE by issuing a Facility message after the keeping operation is performed at the Other End Point.

When a keeping operation is performed at the Other End Point, the MSC will not notify by issuing any message for a CDMA network. Instead, detection is made by the IMS network; therefore, if the UE initiates a VCC handover request in this state, then the IMS network will reject the request, or modify the MSC of the CDMA network so as to issue call keeping information and call recovery information by the MSC.

The processing in this case is in analogy to that of the handover control in the Ring Back Tone state when the UE initiates a call over the CDMA network, that is, in analogy to the fourth to twelfth embodiments, except that the call keeping information is transmitted to indicate that the call is held, and the call recovery information is transmitted to indicate that the call has been recovered.

Referring to Fig.7(a) to Fig.7(b), a system according to an embodiment of the invention includes a user equipment 701 and a voice call continuity server 706. The user equipment 701 is adapted to send a handover request to the voice call continuity server 706, and the voice call continuity server 706 determines whether a call is on-going upon reception of the handover request, and if so, then the handover is permitted; otherwise an exception handling is performed.

Particularly, the system further includes a mobile switching center 703 adapted to send off-hook information to the user equipment 701.

The invented system will be described below taking as an example a device which the VCC AS issues off-hook information in an SMS message to the UE. Referring to Fig.7(a), the system according to an embodiment of the invention includes a user equipment 701, a base station controller 702, a mobile switching center 703, a home location register 704, a short message center 705 and a voice call continuity server 706. The user equipment 701 initiates a handover request to the voice call continuity server 706, the voice call continuity server 706 detects the state of a current call, the Other End Point after unhooking issues to the short message center 705 an SMS message containing off-hook information, which is transmitted to the user equipment 701 through the home location register 704, the mobile switching center 703 and the base station controller 702, and the user equipment 701 starts the handover upon reception of the off-hook message.

The off-hook information and call keeping information can be transmitted from the mobile handover information 703 to the user equipment 701 or from the voice call continuity server 706 to the user equipment 701.

As illustrated in Fig.7(b), a system according to an embodiment of the invention includes a user equipment 701, a mobile switching center 703, a media gateway control unit 707, an inquiring call session control unit 708, a service call session control unit 709 and a voice call continuity server 706.

The user equipment 701 according to the embodiment of the invention includes an information acquisition unit and a handover decision unit. The information acquisition unit is adapted to acquire and send handover information to the handover decision unit; and the handover decision unit determines from received handover information whether a call is on-going, and if so, then a handover request is initiated; otherwise the call continues in the current network.

It shall be noted that those ordinarily skilled in the art can appreciate that all or part of the steps in the above methods according to the embodiments can be implemented by a program instructing relevant hardware. The program may be stored in a computer readable storage medium, e.g., an ROM/RAM, a magnetic disk, an optical disk, etc., and when the program is being executed the steps of the above method are involved.

The foregoing descriptions are illustrative in details of the call handover control method, the communication system and the user equipment according to the invention, the principle and embodiments of the invention have been set forth with the specific examples, and the above descriptions of the embodiments are merely intended to facilitate understanding of the invented method and the core idea thereof. Also variations of the embodiments and their application scopes will be possibly made by those ordinarily skilled in the art in light of the invented idea. Accordingly, the disclosure in the specification shall be considered as limiting the invention.

## Claims

1. A method for controlling a call handover between a first telecommunication network and a second telecommunication network, comprising:
detecting, by a voice call continuity application server, VCC AS (706), the state of a current call when receiving a handover request from a user equipment, UE (701), in communication with the first network, for the current call which is to be transferred from the first network to the second network;
determining, by the VCC AS, whether the current call is in the on-going state in accordance with the detection result; and
maintaining, by the VCC AS, the UE communicating with the first network, if the call is in the Ring Back Tone state or the call Keeping state; or
initiating, by the VCC AS, the handover from the first network to the second network, if the call is in the on-going state.

2. The method according to claim 1, wherein after maintaining the UE communicating with the first network, if the call is in the Ring Back Tone state or the call Keeping state, the method further comprises:
sending, by the VCC AS, response information rejecting the handover request; and
instructing, by the VCC AS, the UE to request a handover again after a preset period of time.

3. The method of claim 1 or 2, wherein whether the call is on-going is communicated via a Session Initiation Protocol, SIP, signaling.

4. The method of claim 1 or 2, wherein whether the call is on-going is communicated via a message having call state information therein.

5. The method of claim 1 or 2, wherein the first network is a CS domain, and the second network is an IMS domain.

6. The method of claim 1 or 2, wherein the first network is an IMS domain, and the second network is a CS domain.

7. A method for controlling a call handover between a first telecommunication network and a second telecommunication network, comprising:
Obtaining, by a user equipment, UE (701), in communication with the first network, the state of a current call by a message of the session initiation protocol, when the current call is to be transferred from a first network to a second network;
determining, by the UE, whether the current call is in the on-going state in accordance with the call state,; and
if the call is in the on-going state, sending, by the UE, a call handover request to the second network; or
if the call is in a Ring Back Tone state or a call Keeping state, continuing, by the UE, with the call in the first network.

8. The method of claim 7, wherein whether the call is on-going is communicated via a message having call state information therein.

9. A user equipment, UE (701) for controlling a call handover between a first telecommunication network and a second telecommunication network, the UE comprises:
an information acquisition unit, is adapted to obtain the state of a current call by a message of the session initiation protocol, when the current call is to be transferred from a first network to a second network; and
a handover decision unit, is adapted to determine whether the current call is in the on-going state in accordance with the call state; and
send a call handover request to the second network if the call is in the on-going state; wherein the call is handed over from the first network to the second network in response to obtaining the handover request from the UE; or
continue with the call in the first network if the call is in a Ring Back Tone state or a call Keeping state.

10. A system for controlling a call handover between a first telecommunication network and a second telecommunication network, comprising a User Equipment UE (701) according to claim 9, in communication with the first network

11. A Voice Call Continuity Application Server, VCC AS (706), for controlling a call handover between a first telecommunication network and a second telecommunication network, the VCC AS is adapted to:
detect the state of a current call when receiving a handover request from a user equipment, UE (701), in communication with the first network, for the current call which is to be transferred from the first network to the second network;
determine whether the current call is in the on-going state in accordance with the detection result; and
maintain the UE communicating with the first network, if the call is in the Ring Back Tone state or the call Keeping state; or
initiate the handover from the first network to the second network, if the call is in the on-going state.

12. A system for controlling a call handover between a first telecommunication network and a second telecommunication network, comprising a user equipment (701) and a voice call continuity application server VCC AS (706) according to claim 11.

## Patentansprüche

1. Verfahren zum Steuern einer Anrufweiterreichung zwischen einem ersten Telekommunikationsnetz und einem zweiten Telekommunikationsnetz, mit den folgenden Schritten:
ein Voice Call Continuity Application Server VCC AS (706) detektiert den Zustand eines aktuellen Anrufs beim Empfangen einer Weiterreichungsanforderung von einem Benutzergerät UE (701) in Kommunikation mit dem ersten Netz für den aktuellen Anruf, der von dem ersten Netz zu dem zweiten Netz zu transferieren ist;
der VCC AS bestimmt gemäß dem Detektionsergebnis, ob sich der aktuelle Anruf im laufenden Zustand befindet; und
der VCC AS hält das Kommunizieren des UE mit dem ersten Netz aufrecht, wenn sich der Anruf im Zustand Ring Back Tone oder im Anruf-Keeping-Zustand befindet; oder
der VCC AS leitet die Weiterreichung von dem ersten Netz zu dem zweiten Netz ein, wenn sich der Anruf im laufenden Zustand befindet.

2. Verfahren nach Anspruch 1, wobei nach dem Aufrechterhalten des Kommunizierens des UE mit dem ersten Netz, wenn sich der Anruf im Zustand Ring Back Tone oder in dem Anruf-Keeping-Zustand befindet, das Verfahren ferner Folgendes umfasst:
der VCC AS sendet Antwortinformationen, die die Weiterreichungsanforderung zurückweisen; und
der VCC AS weist das UE an, nach einer voreingestellten Zeitdauer nochmals eine Weiterreichung anzufordern.

3. Verfahren nach Anspruch 1 oder 2, wobei über eine Signalisierung des Session Initiation Protocol SIP übermittelt wird, ob der Anruf gerade läuft.

4. Verfahren nach Anspruch 1 oder 2, wobei über eine Nachricht, in der sich Anrufzustandsinformationen befinden, übermittelt wird, ob der Anruf gerade läuft.

5. Verfahren nach Anspruch 1 oder 2, wobei das erste Netz eine CS-Domäne ist und das zweite Netz eine IMS-Domäne ist.

6. Verfahren nach Anspruch 1 oder 2, wobei das erste Netz eine IMS-Domäne ist und das zweite Netz eine CS-Domäne ist.

7. Verfahren zum Steuern einer Anrufweiterreichung zwischen einem ersten Telekommunikationsnetz und einem zweiten Telekommunikationsnetz, mit den folgenden Schritten:
ein Benutzergerät UE (701) in Kommunikation mit dem ersten Netz erhält den Zustand eines aktuellen Anrufs durch eine Nachricht des Session Initiation Protocol, wenn der aktuelle Anruf von einem ersten Netz zu einem zweiten Netz zu transferieren ist;
das UE bestimmt gemäß dem Anrufzustand, ob sich der aktuelle Anruf im laufenden Zustand befindet; und
wenn sich der Anruf im laufenden Zustand befindet, sendet das UE eine Anrufweiterreichungsanforderung zu dem zweiten Netz; oder
wenn sich der Anruf in einem Zustand Ring Back Tone oder einem Anruf-Keeping-Zustand befindet, setzt das UE den Anruf in dem ersten Netz fort.

8. Verfahren nach Anspruch 7, wobei über eine Nachricht, in der sich Anrufzustandsinformationen befinden, übermittelt wird, ob der Anruf gerade läuft.

9. Benutzergerät UE (701) zum Steuern einer Anrufweiterreichung zwischen einem ersten Telekommunikationsnetz und einem zweiten Telekommunikationsnetz, wobei das UE Folgendes umfasst:
eine Informationsbeschaffungseinheit, die dafür ausgelegt ist, durch eine Nachricht des Session Initiation Protocol den Zustand eines aktuellen Anrufs zu erhalten, wenn der aktuelle Anruf von einem ersten Netz zu einem zweiten Netz zu transferieren ist; und
eine Weiterreichungsentscheidungseinheit, die dafür ausgelegt ist, gemäß dem Anrufzustand zu bestimmen, ob sich der aktuelle Anruf im laufenden Zustand befindet; und
Senden einer Anrufweiterreichungsanforderung zu dem zweiten Netz, wenn sich der Anruf im laufenden Zustand befindet; wobei der Anruf als Reaktion auf das Erhalten der Weiterreichungsanforderung von dem UE von dem ersten Netz an das zweite Netz übergeben wird; oder
Fortsetzen des Anrufs in dem ersten Netz, wenn sich der Anruf in einem Zustand Ring Back Tone oder einem Anruf-Keeping-Zustand befindet.

10. System zum Steuern einer Anrufweiterreichung zwischen einem ersten Telekommunikationsnetz und einem zweiten Telekommunikationsnetz, das ein Benutzergerät UE (701) nach Anspruch 9 in Kommunikation mit dem ersten Netz umfasst.

11. Voice Call Continuity Application Server VCC AS (706) zum Steuern einer Anrufweiterreichung zwischen einem ersten Telekommunikationsnetz und einem zweiten Telekommunikationsnetz, wobei der VCC AS für Folgendes ausgelegt ist:
Detektieren des Zustands eines aktuellen Anrufs beim Empfang einer Weiterreichungsanforderung von einem Benutzergerät UE (701) in Kommunikation mit dem ersten Netz für den aktuellen Anruf, der von dem ersten Netz zu dem zweiten Netz zu transferieren ist;
Bestimmen, ob sich der aktuelle Anruf im laufenden Zustand befindet, gemäß dem Detektionsergebnis; und
Aufrechterhalten des Kommunizierens des UE mit dem ersten Netz, wenn sich der Anruf im Zustand Ring Back Tone oder im Anruf-Keeping-Zustand befindet; oder
Einleiten der Weiterreichung von dem ersten Netz zu dem zweiten Netz, wenn sich der Anruf im laufenden Zustand befindet.

12. System zum Steuern einer Anrufweiterreichung zwischen einem ersten Telekommunikationsnetz und einem zweiten Telekommunikationsnetz, das ein Benutzergerät (701) und einen Voice Call Continuity Application Server VCC AS (706) nach Anspruch 11 umfasst.

## Revendications

1. Procédé permettant de commander un transfert d'appel entre un premier réseau de télécommunications et un second réseau de télécommunications, comprenant :
la détection, par un serveur d'application de continuité d'appel, VCC AS (706), de l'état d'un appel en cours lors de la réception d'une demande de transfert d'appel provenant d'un équipement d'utilisateur, UE (701), en communication avec le premier réseau, pour l'appel en cours qui doit être transféré depuis le premier réseau vers le second réseau,
le fait de déterminer, par le serveur VCC AS, si l'appel en cours se trouve ou non à l'état de progression en fonction du résultat de détection, et
le maintien, par le serveur VCC AS, de la communication entre l'équipement d'utilisateur UE et le premier réseau si l'appel se trouve à l'état de tonalité de retour d'appel ou à l'état de maintien d'appel, ou
le lancement, par le serveur VCC AS, du transfert d'appel depuis le premier réseau vers le second réseau, si l'appel se trouve à l'état de progression.

2. Procédé selon la revendication 1, dans lequel, après le maintien de la communication entre l'équipement d'utilisateur UE et le premier réseau, le procédé comprend en outre, si l'appel se trouve à l'état de tonalité de retour d'appel ou à l'état de maintien d'appel :
l'envoi, par le serveur VCC AS, d'informations de réponse rejetant la demande de transfert d'appel, et
l'ordre, par le serveur VCC AS, à l'équipement d'utilisateur UE de demander à nouveau un transfert d'appel après un intervalle de temps préréglé.

3. Procédé selon la revendication 1 ou 2, dans lequel le fait de savoir si l'appel est en cours de progression ou non est communiqué par l'intermédiaire d'une signalisation au protocole d'initiation de session, SIP.

4. Procédé selon la revendication 1 ou 2, dans lequel le fait de savoir si l'appel est en cours de progression ou non est communiqué par l'intermédiaire d'un message comportant des informations sur l'état d'appel.

5. Procédé selon la revendication 1 ou 2, dans lequel le premier réseau est un domaine à commutation de circuits, CS, et le second réseau est un domaine de type de sous-système multimédia au protocole Internet, IMS.

6. Procédé selon la revendication 1 ou 2, dans lequel le premier réseau est un domaine de type IMS, et le second réseau est un domaine de type CS.

7. Procédé permettant de commander un transfert d'appel entre un premier réseau de télécommunications et un second réseau de télécommunications, comprenant :
la récupération, par un équipement d'utilisateur, UE (701), en communication avec le premier réseau, de l'état d'un appel en cours grâce à un message du protocole d'initiation de session lorsque l'appel en cours doit être transféré depuis un premier réseau vers un second réseau,
le fait de déterminer, par l'équipement d'utilisateur UE, si l'appel en cours se trouve ou non à l'état de progression en fonction de l'état d'appel, et
si l'appel se trouve à l'état de progression, l'envoi, par l'équipement d'utilisateur UE, d'une demande de transfert d'appel au second réseau, ou
si l'appel se trouve à l'état de tonalité de retour d'appel ou à l'état de maintien d'appel, la poursuite, par l'équipement d'utilisateur UE, de l'appel dans le premier réseau.

8. Procédé selon la revendication 7, dans lequel le fait de savoir si l'appel est en cours de progression, il ou non est communiqué par l'intermédiaire d'un message comportant des informations d'état d'appel.

9. Équipement d'utilisateur, UE (701), permettant de commander un transfert d'appel entre un premier réseau de télécommunications et un second réseau de télécommunications, l'équipement d'utilisateur UE comprenant :
une unité d'acquisition d'informations qui est conçue pour récupérer l'état d'un appel en cours grâce à un message du protocole d'initiation de session lorsque l'appel en cours doit être transféré depuis un premier réseau vers un second réseau, et
une unité de décision de transfert d'appel qui est conçue pour déterminer si l'appel en cours se trouve à l'état de progression en fonction de l'état d'appel, et
l'envoi d'une demande de transfert d'appel au second réseau si l'appel se trouve à l'état de progression, l'appel étant transféré depuis le premier réseau vers le second réseau en réponse à la récupération de la demande de transfert d'appel provenant de l'équipement d'utilisateur UE, ou
la poursuit de l'appel dans le premier réseau si l'appel se trouve dans un état de tonalité de retour d'appel ou dans un état de maintien d'appel.

10. Système permettant de commander un transfert d'appel entre un premier réseau de télécommunications et un second réseau de télécommunications, comprenant un équipement d'utilisateur UE (701) conforme à la revendication 9, en communication avec le premier réseau.

11. Serveur d'application de continuité d'appel, VCC AS (706), permettant de commander un transfert d'appel entre un premier réseau de télécommunications et un second réseau de télécommunications, le serveur VCC AS étant conçu pour :
détecter l'état d'un appel en cours lors de la réception d'une demande de transfert provenant d'un équipement d'utilisateur, UE (701), en communication avec le premier réseau, pour l'appel en cours qui doit être transféré depuis le premier réseau au second réseau,
déterminer si l'appel en cours se trouve à l'état de progression en fonction du résultat de détection, et
maintenir la communication entre l'équipement d'utilisateur UE et le premier réseau si l'appel se trouve à l'état de tonalité de retour d'appel ou à l'état de maintien d'appel, ou
lancer le transfert d'appel depuis le premier réseau vers le second réseau si l'appel se trouve à l'état de progression.

12. Système permettant de commander un transfert d'appel entre un premier réseau de télécommunications et un second réseau de télécommunications, comprenant un équipement d'utilisateur (701) et un serveur d'application de continuité d'appel VCC AS (706) conforme à la revendication 11.
